# EUROPÄISCHE PATENTSCHRIFT

(11) **EP 1 254 043 B1**
(45) Veröffentlichungstag und Bekanntmachung des Hinweises auf die Patenterteilung: **18.08.2004**
(21) Anmeldenummer: 00974468.1
(22) Anmeldetag: 27.10.2000
(51) Int. Cl.: B62D 25/14

(54) **BAUTEIL FÜR EIN KRAFTFAHRZEUG**
STRUCTURAL COMPONENT FOR A MOTOR VEHICLE
PIECE POUR UN VEHICULE A MOTEUR

(30) Priorität: 27.01.2000 DE 10003575
(43) Veröffentlichungstag der Anmeldung: 06.11.2002
(73) Patentinhaber: Behr GmbH & Co., 70469 Stuttgart (DE)
(72) Erfinder: REDDIG, Thomas, 74321 Bietigheim-Bissingen (DE); WOLF, Walter, 71570 Oppenweiler-Zell (DE)
(74) Vertreter: Grauel, Andreas, Dr.
(86) Internationale Anmeldenummer: PCT/EP2000/010599
(87) Internationale Veröffentlichungsnummer: WO 2001/054964

(56) Entgegenhaltungen:
- EP-A- 0 982 087
- EP-A- 0 995 668
- WO-A-00/56517
- DE-A- 19 753 877
- DE-U- 29 916 470
- FR-A- 2 789 043
- US-A- 5 354 114

## Beschreibung

Die Erfindung betrifft ein Bauteil für ein Kraftfahrzeug, insbesondere einen Querträger für den Cockpitbereich, gemäß dem Oberbegriff des Anspruchs 1 sowie ein Verfahren zur Herstellung des Bauteils und Verwendungen dieses Bauteils.

Aus dem Kraftfahrzeugbau sind aus Rohren bestehende Querträger bekannt, die für eine ausreichende Biege-, Knick- und Torisionssteifigkeit und damit eine ausreichende Druckbelastbarkeit aus Metall bestehen und entsprechend große Wandstärken aufweisen. Daraus resultieren ein hohes Gewicht und Kostennachteile. Die Rohre lassen sich prinzipiell zur Luftführung, beispielsweise von einer mittig im Fahrzeug angeordneten Klimaanlage zu seitlichen Ausströmem, nutzen (siehe z.B. DE 197 53 877), wobei dies bis heute nicht genutzt wird, da sich an den Metallrohren leicht unerwünschtes Kondenswasser abscheiden kann.

Weiter sind Querträger bekannt, die eine zweischalige Konstruktion mit eingeschweißten Stegen zur Stabilisierung aufweisen. Ein derartiger Querträger ist beispielsweise aus der DE 197 20 902 bekannt. Derartige Querträger sind in der Herstellung sehr aufwendig und haben ein hohes Gewicht. Eine Luftführung ist nicht möglich.

Aus der gattungsgemäßer EP 0 370 342 ist ein als Träger im Kraftfahrzeug einsetzbares Leichtbauteil bekannt, das einen bevorzugt aus Metall bestehenden, schalenförmigen Grundkörper aufweist, in dessen Innenraum Verstärkungsrippen angeordnet sind. Die Verstärkungsrippen bestehen aus eingespritztem Kunststoff und sind mit dem Metallgrundkörper an diskreten Verbindungsstellen verbunden, indem der Kunststoff im Metallteil angeordnete Durchbrüche durchsetzt und über die Flächen der Durchbrüche hinausreicht. Der Metallgrundkörper ist U-förmig ausgebildet und die Verstärkungsrippen durchsetzen zur Erzielung einer hohen Steifigkeit und Festigkeit den Innenraum des Grundkörpers. Dieses bekannte Leichtbauteil, das in der sogenannten Hybridbauweise ausgebildet ist, hat ein vorteilhaft geringes Gewicht bei gleichzeitig ausreichender Festigkeit, Steifigkeit und Belastbarkeit. Eine Luftführung ist mit diesem als Träger einsetzbaren Leichtbauteil nicht möglich.

Aus der DE 299 16 470 U ist einen Querträger für den Cockpitbereich bekannt, der einen aus Kunststoff hergestellten Luftführungskanal aufweist, der radial außen sowohl eine Verrippung aufweist als auch Verbindungspunkte besitzt. Dieser Luftführungskanal wird in zwei halbschalenartige Metaltschalen eingelegt und in diesen verbunden.

Ausgehend von diesem Stand der Technik ist es Aufgabe der Erfindung, ein verbessertes Bauteil bereitzustellen, das einerseits die Vorteile eines Leichtbauteils aufweist und dennoch neben einer tragenden noch weitere Funktionen erfüllen kann. Eine weitere Aufgabe ist die Bereitstellung eines Verfahrens zur Herstellung dieses Bauteils und von Verwendungen des Bauteils.

Diese Aufgabe wird gelöst durch einen Gegenstand mit den Merkmalen des Anspruchs 1 sowie ein Verfahren mit den Merkmalen des Anspruchs 9.

Erfindungsgemäß weist das Bauteil, das als Leichtbauteil mit einem schalenförmigen Grundkörper und mit aus angespritztem Kunststoff bestehenden Verstärkungsrippen ausgebildet ist, wenigstens einen Kanal auf, der zusammen mit den Verstärkungsrippen ganz oder teilweise im Innenraum des Grundkörpers eingespritzt ist. Der Kanal durchsetzt dabei die Verstärkungsrippen. Damit ist insgesamt ein Bauteil in Hybridbauweise geschaffen, das sowohl die Vorteile der Hybridbauweise, nämlich gute Festigkeit, Steifigkeit und Belastbarkeit sowie einfache, schnelle und kostengünstige Herstellbarkeit bei gleichzeitig geringem Gewicht, als auch eine Führungsfunktion für verschiedenste Medien aufweist. In dem Kanal kann beispielsweise Luft von einer beispielsweise mittig angeordneten Klimaanlage zu seitlichen Ausströmern geführt werden. Das Bauteil bildet dann vorzugsweise einen zwischen den A-Säulen des Fahrzeugs anzuordnenden Querträger, an den die Instrumententafel und weitere Komponenten, wie Lenksäule, Airbag o.dgl. angebunden werden können. In dem Kanal könnten auch andere Medien, wie Wischwasser für die Scheinwerfer oder die Windschutzscheibe, Kühlwasser, Öl, Druckluft oder dergleichen geführt oder gelagert werden. Ebenso kann der Kanal für die geschützte Verlegung von Kabeln, Benzinleitung, Ölleitung, Druckluftleitungen oder dergleichen oder zur Aufbewahrung von Gegenständen dienen.

Zwar ist es prinzipiell möglich, dass sich der Kanal unabhängig von dem Grundkörper in eine beliebige Richtung erstreckt. Bevorzugt erstreckt sich der Kanal aber in Längsrichtung des Bauteils, so daß das Bauteil optimal zur Aufnahme des Kanals ausgenutzt werden kann.

An den Enden des Kanals können jeweils ein Einlaß- bzw. ein Auslaßstutzen vorgesehen und seitlich aus dem Bauteil geführt sein, damit das Bauteil mit seinen Enden, beispielsweise zwischen den A-Säulen des Fahrzeugs, befestigt werden kann.

Bei Einsatz des Bauteils als Instrumententafelträger ist der Kanal vorteilhafterweise als Luftführungskanal ausgebildet, und ein zweiter Luftführungskanal ist vorgesehen, damit Luft von einer beispielsweise mittig angeordneten Klimaanlage zu seitlichen Ausströmern geführt werden können. Die Kanäle sind dann in etwa symmetrisch zueinander angeordnet, und deren Einlaßstutzen befinden sich in etwa im Mittenbereich des Bauteils und deren Auslaßstutzen in den Endbereichen des Bauteils.

Anstelle zweier Einlaßstutzen für die beiden Kanäle könnte in einer Ausgestaltung ein gemeinsamer Einlaßstutzen für beide Kanäle vorgesehen sein.

Zur guten Entformbarkeit des Bauteils in einem Spritzwerkzeug verjüngt sich der Kanal im Querschnitt geringfügig von einem Ende zu dem anderen.

In einer Ausgestaltung der Erfindung ist der Grundkörper im Querschnitt U-förmig ausgebildet, mit U-Schenkeln und einer Basis, wobei die Basis vorzugsweise bogenförmig, beispielsweise halbkreisförmig, ausgebildet ist. Dann kann der eingespritzte Luftführungskanal im Querschnitt in strömungsgünstiger Weise in etwa rund ausgebildet werden, ohne daß Hinterschnitte, die ein Entformen erschweren würden, entstehen.

In einer bevorzugten Ausgestaltung der Erfindung bildet, im Querschnitt gesehen, ein Teilbereich des Grundkörpers einen Teil der Wandung des Kanals. So ist zwischen dem Kanal und dem Grundkörper kein Freiraum vorhanden, der die Herstellung im Spritzgußverfahren erschweren würde.

Um die Stabilität zu erhöhen und um Anbindungspunkte für Fahrzeugkomponenten, wie Lenksäule etc., zu erhalten, sind die Verstärkungsrippen nicht nur in bekannter Weise im Innenraum sondern auch außerhalb des Innenraums angeordnet.

Im folgenden wird die Erfindung anhand von Ausführungsbeispielen unter Bezugnahme auf die Zeichnung im Einzelnen erläutert. In der Zeichnung zeigen:
- **Fig. 1 und 2**: perspektivische Ansichten eines erfindungsgemäßen Bauteils;
- **Fig. 3**: eine Detailansicht eines Endes des Bauteils;
- **Fig. 4**: einen Querschnitt entlang der Linie IV-IV aus Fig. 5;
- **Fig. 5**: einen Querschnitt entlang der Linie V-V aus Fig. 4;
- **Fig. 6a, 6b, 6c**: weitere Ausführungsformen des Bauteils im Querschnitt.

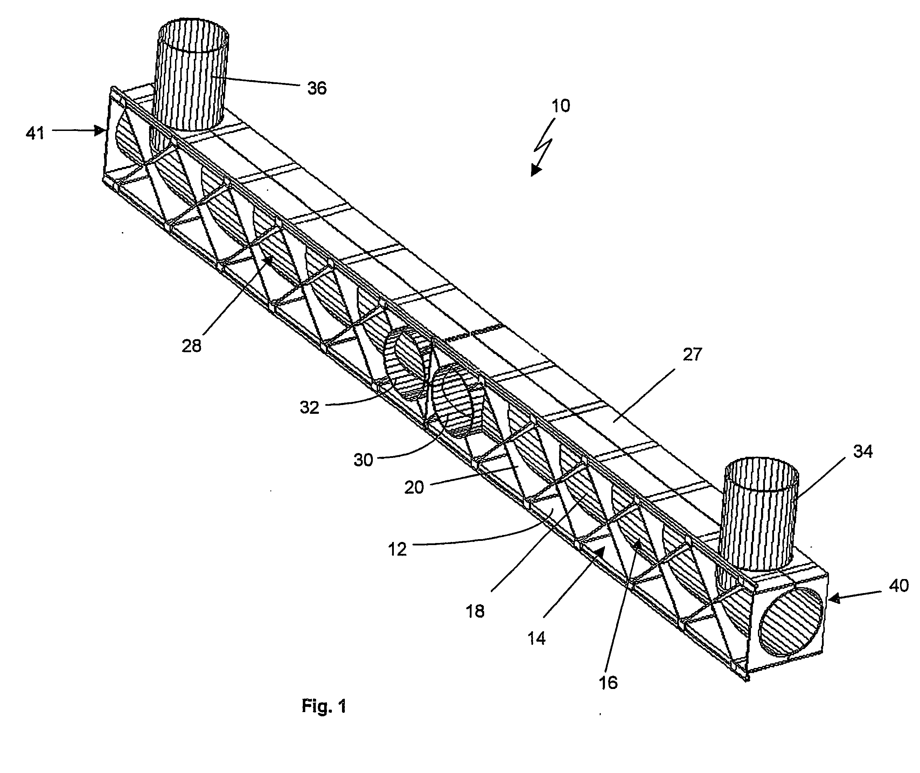

Ein erfindungsgemäßes Bauteil 10 weist einen schalenförmigen Grundkörper 12 auf, der bevorzugt aus Metall besteht. Im Innenraum 14 des Grundkörpers 12 ist wenigstens ein Kanal 16 angeordnet, der sich bevorzugt in Längsrichtung des Bauteils 10 erstreckt. Zwischen einer Wandung 18 des Kanals 16 und dem Grundkörper 12 sind im Innenraum 14 Verstärkungsrippen 20 angeordnet. Zwischen den einzelnen Verstärkungsrippen 20 ist ein Freiraum belassen, der trapez-, dreieck-, rautenförmig o. dgl. ausgestaltet ist. Im dargestellten Ausführungsbeispiel bilden die Verstärkungsrippen 20 ein rautenartiges Muster (Fig. 1). Der Kanal 16 und die Verstärkungsrippen 20 bestehen aus Kunststoff und sind einstückig im Spritzgußverfahren hergestellt.

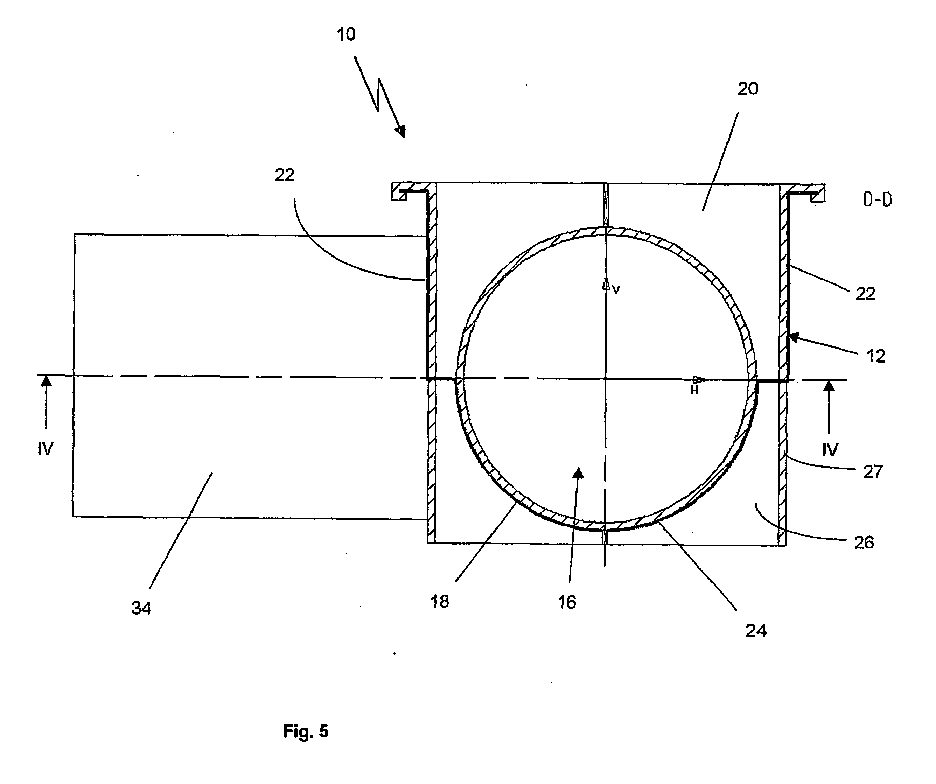

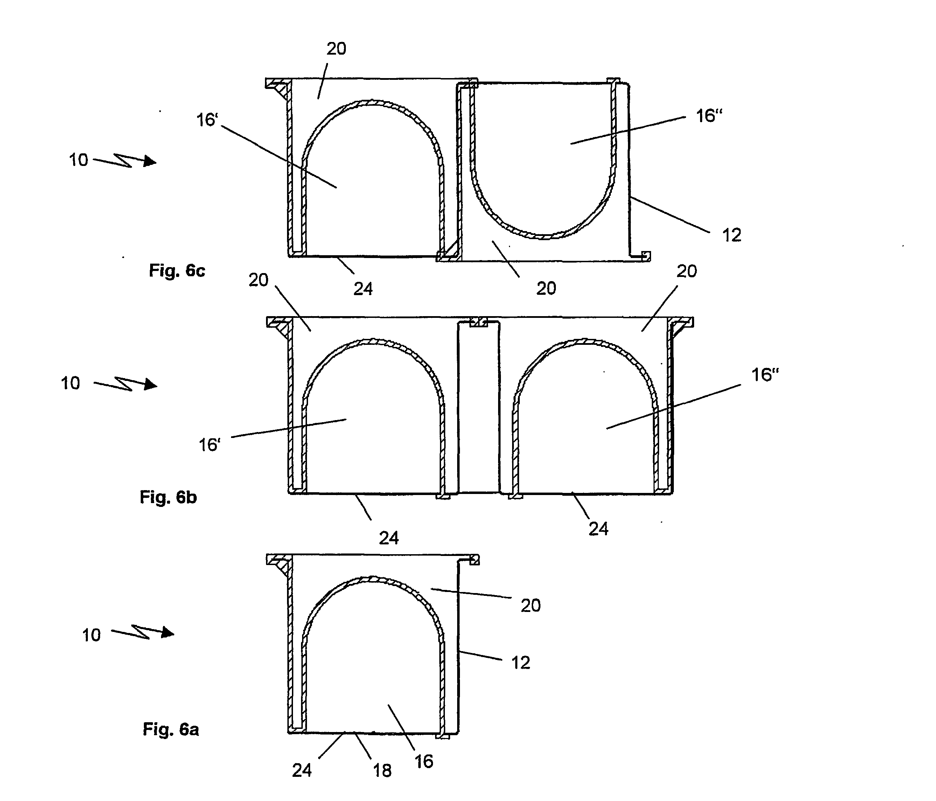

Der Grundkörper 12 ist im Querschnitt bevorzugt U-förmig ausgebildet mit U-Schenkeln 22 und einer Basis 24, wobei die Basis 24 bevorzugt in etwa bogenförmig ausgebildet ist (Fig. 5). Die Basis 24 bildet, wie in Fig. 5 dargestellt, einen Teil der Wandung 18 des Kanals 16. Im Bereich der Basis 24 ist der Kanal 16 doppelwandig ausgebildet. Der Grundkörper 12 ist hier mit dem die Wand 18 bildenden Kunststoff überzogen. Prinzipiell wäre es auch möglich, daß die Basis 24 unmittelbar die Wand 18 bildet, wie dies weiter unten anhand der Ausführungsbeispiele aus den Fig. 6a, 6b, 6c beschrieben ist. Wenn der Grundkörper jedoch aus Metall besteht und der Kanal als Luftführungskanal eingesetzt wird, besteht die Gefahr, daß sich an dem Metall leicht unerwünschtes Kondenswasser bildet.

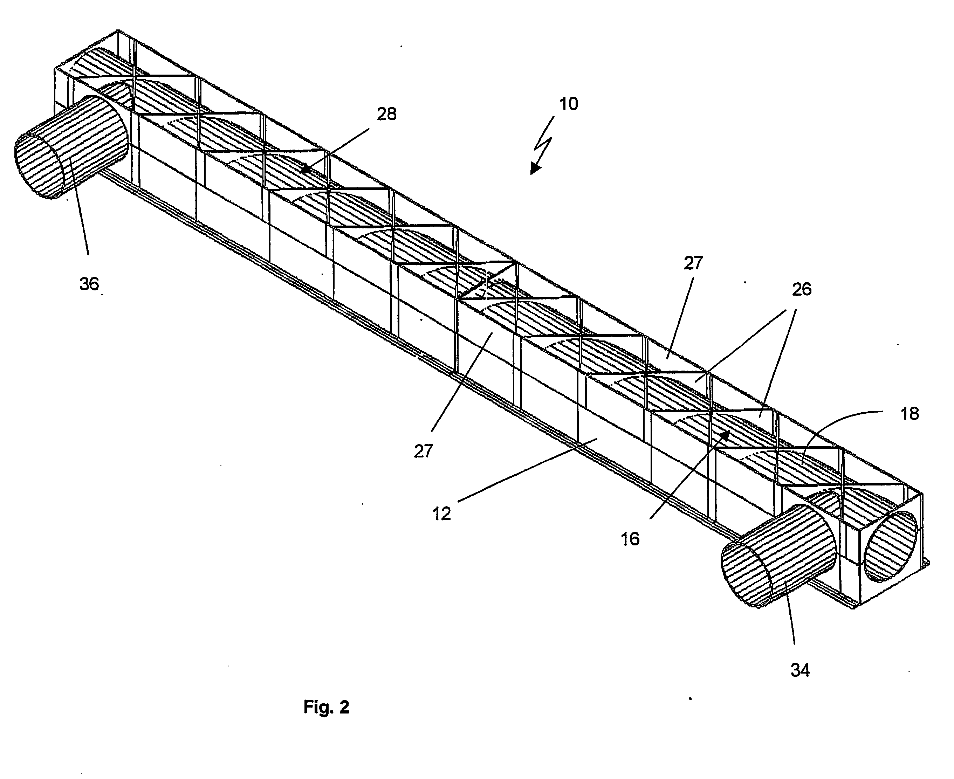

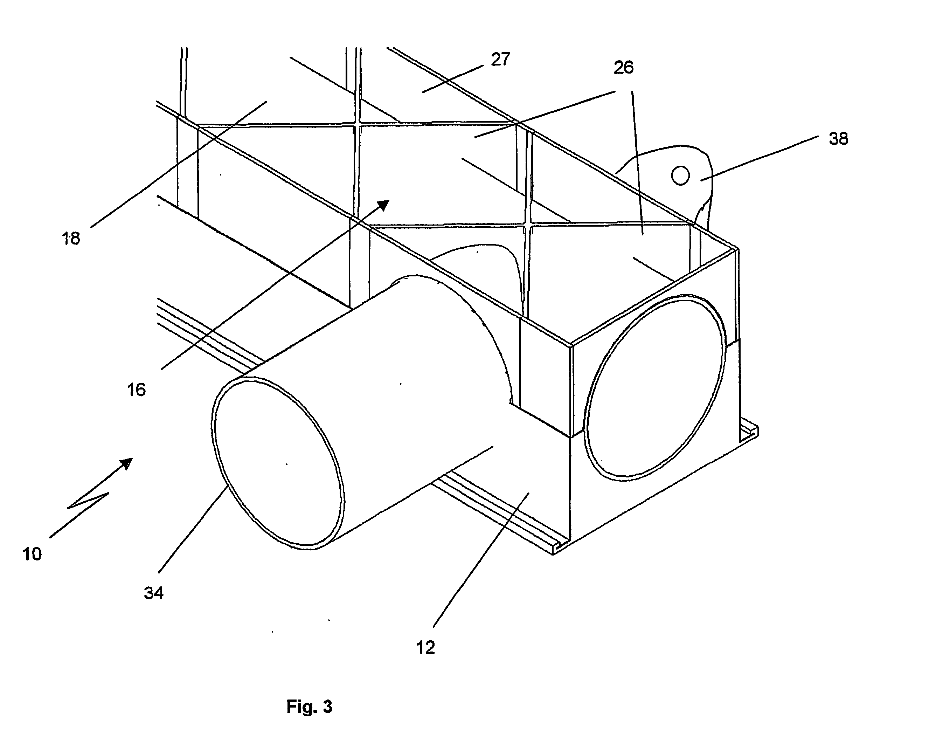

Um die Stabilität des Bauteils 10 zu erhöhen, sind auch außerhalb des Innenraumes insbesondere im Bereich der Basis 24 weitere Verstärkungsrippen 26 angeordnet, wie insbesondere in den Fig. 2 und 3 gezeigt. Die zweiten Verstärkungsrippen 26 bilden wie die ersten Verstärkungsrippen 20 ein rautenartiges Muster, wobei zusätzlich am Rand des Bauteils 10 Stege 27 vorgesehen sind, die ebenfalls aus Kunststoff bestehen und zusammen mit den Verstärkungsrippen 26 gespritzt sind. An den Stegen 27 können Befestigungslaschen 38 o. dgl. angeordnet sein, die lediglich in Fig. 3 beispielhaft dargestellt sind.

Das Bauteil 10 wird bevorzugt als Querträger im Cockpitbereich eingesetzt, so daß in der folgenden Beschreibung eines von vielen möglichen Ausführungsbeispielen das Bauteil 10 als Querträger bezeichnet wird.

Bevorzugt ist in dem Querträger 10 neben dem Kanal 16 ein weiterer Kanal 28 in etwa symmetrisch zum ersten Kanal 16 angeordnet. Die Kanäle 16 und 28 weisen jeweils einen Einlaßstutzen 30 bzw. 32 und einen Auslaßstutzen 34 bzw. 36 auf. Einlaß- und Auslaßstutzen 30, 32, 34, 36 sind jeweils seitlich aus dem Querträger 10 herausgeführt. Je nach Einsatzzweck können die Stutzen aus einer der vier Seiten des Querträgers 10 herausgeführt sein. Die Einlaßstutzen 30 und 32 befinden sich etwa in der Mitte des Querträgers 10 und die Auslaßstutzen 34 und 36 in den beiden Endbereichen des Querträgers 10. Ein derart ausgebildeter Querträger 10 kann dann nicht nur zur Halterung der Instumententafel und weiterer im Bereich der Instrumententafel angeordneter Komponente, wie Lenksäule, Airbag und ähnlichem, genutzt werden, sondern kann gleichzeitig zur Führung von Luft dienen, die von einer mittig angeordneten Klimaanlage zu Ausströmern, die in den seitlichen Bereichen des Fahrzeuginnenraumes angeordnet sind, geführt werden muß.

Die Kanäle 16 und 28 mit ihren Einlaß- und Auslaßstutzen 30, 32, 34, 36 und die Verstärkungsrippen 20 und 26 mit den Stegen 27 werden in einem gemeinsamen Spritzgußprozeß gespritzt, wie im Einzelnen nachfolgend beschrieben wird. Die Kunststoffteile sind mit dem Grundkörper 12 an diskreten Verbindungsstellen miteinander verbunden, wie dies im Einzelnen aus der EP 0 370 342 bereits bekannt ist. An den diskreten Verbindungsstellen weist der Grundkörper 12 in der Zeichnung nicht dargestellte Durchbrüche auf, die von dem Kunststoff durchsetzt werden und von dem Kunststoff übergriffen sind.

Der erfindungsgemäße Querträger 10 wird in folgenden Verfahrensschritten hergestellt:

Zunächst wird der Grundkörper 12, durch eine oder mehrere der verschiedenen Metallbearbeitungstechniken, wie Walzen, Strangpressen, Abkanten, Stanzen, Lochen, Tiefziehen, hergestellt. Dann wird der Grundkörper 12 in ein Spritzwerkzeug eingelegt und die Kanäle 16 und 28 zusammen mit den Verstärkungsrippen 20 und 26 sowie den Stegen 27 gespritzt. Gleichzeitig werden die Einlaß- und Auslaßstutzen 30, 32, 34 und 36 gespritzt. Um die Kanäle 16 und 28 sowie die Einlaß- und Auslaßstutzen 30, 32, 34, 36 zu erhalten, müssen entsprechende Schieber, auch Kerne genannt, in dem Formwerkzeug vorhanden sein. Die Kerne für die Stutzen werden in Stutzenrichtung eingeführt und die Kerne für die Kanäle werden von den Enden 40 und 41 des Querträgers 10 her in Längsrichtung (Pfeil 42) eingeführt. Nach dem Einspritzen des Kunststoffes und Formen der Kunststoffteile, nämlich der Kanäle 16 und 28, der Einlaß- und Auslaßstutzen 30, 32, 34 und 36, der Verstärkungsrippen 20 und 26 und der Stege 27, werden zum Entformen unter anderem die Kerne wieder herausgezogen. Damit dies möglich ist, müssen sich die Kanäle im Querschnitt geringfügig von den Enden 40 und 41 zur Mitte des Querträgers zu den Einlaßstutzen hin verjüngen, so daß der Kern und der Kanal leicht konisch ausgebildet sind. Die Querschnittsänderung ist derart gering, die Konizität beträgt typischerweise 0,5° bis 1°, dass sie in der Zeichnung nicht zu erkennen ist. Mit entsprechend speziell ausgebildeten Kernen könnten auch Kanäle erhalten werden, die zylindrisch ausgebildet sind.

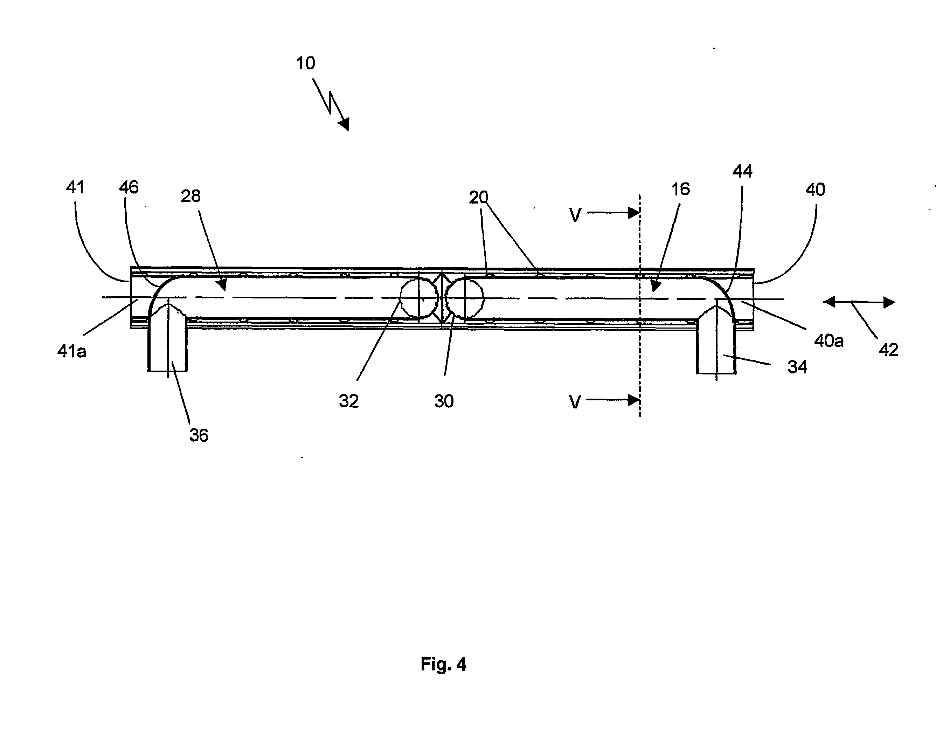

Nach Entformen werden dann die Kanäle 16 und 28 bei Bedarf an ihren Enden 40a und 41 a durch Einsetzen von Verschlußelementen 44 und 46 verschlossen (Fig. 4). Bei Verwendung der Kanäle 16 und 28 zur Luftführung sind die Verschlußelemente 44 und 46 vorteilhafterweise strömungsgünstig geformt, damit die zu führende Luft aus dem entsprechenden Luftführungskanal 16 bzw. 28 in den Auslaßstutzen 34 bzw. 36 strömungsgünstig geführt werden kann.

Der Querträger 10 kann in ein Fahrzeug zwischen den A-Säulen angeordnet werden. Zur Anbindung des Querträgers an die A-Säulen können Befestigungselemente vorgesehen sein, die in die offenen, über die Verschlußelemente 44 und 46 hinausstehenden Enden 40a und 41 a der Kanäle 16 und 28 einsteckbar und gegebenenfalls dort festlegbar sind.

In weiterer Ausgestaltung der Erfindung können der Grundkörper 12 und der Kanal 16 bzw. 28 im Querschnitt andere als in den Fig. 1 bis 5 dargestellte Formen aufweisen. Die Fig. 6a, 6b, 6c zeigen drei weitere Ausführungsbeispiele eines erfindungsgemäßen Querträgers 10. In diesen Figuren sind die gleichen Bestandteile des Querträgers 10 mit gleichen Bezugsziffern wie in den Fig. 1 bis 5 bezeichnet.

In der Fig. 6a ist ein Querträger dargestellt, der einen U-förmigen Grundkörper 12 und einen darin angeordneten Kanal 16 aufweist, wobei ein Teil des Grundkörpers 12, nämlich die Basis 24 des im Querschnitt U-förmigen Grundkörpers 12, eine Wand 18 des Kanals 16 bildet.

Ebenso sind auch die Kanäle 16 der Querträger 10 nach den Ausführungsbeispielen aus den Fig. 6b und 6c ausgebildet, wobei hier jedoch der Querträger 10 zwei parallel zueinander angeordnete Kanäle 16' und 16" aufweist und der Grundkörper 12 des Querträgers 10 im Querschnitt zweifach U-förmig ausgebildet ist und in jedem U ein Luftkanal 16' bzw. 16" angeordnet ist. Mehr als zwei parallel angeordnete Kanäle in mehr als zwei U-förmigen Teilbereichen des Querträgers sind denkbar.

In diesen Ausführungsbeispielen aus den Fig. 6a, 6b, 6c sind die Verstärkungsrippen 20 lediglich im Innenraum 14 des Querträgers 10 angeordnet.

Weitere Ausgestaltungen der Erfindung sind denkbar:

So kann anstelle der beiden Einlaßstutzen 30 und 32 ein gemeinsamer Einlaßstutzen vorgesehen sein, durch den Luft in beide Kanäle 16 und 28 eintritt. Die Eintrittsöffnung des gemeinsamen Stutzens oder auch die Öffnungen der einzelenen Einlaßstutzen 30 und 32 können andere als runde Formen aufweisen.

Es ist auch denkbar, dass die Einlaß- und/oder Auslaßstutzen entfallen und die Luft oder sonstige Medien, die durch den Kanal geführt werden sollen, unmittelbar mittig axial in den Kanal eingeführt werden. Das würde das Formwerkzeug mit seinen Schiebern vereinfachen.

Der oder die Kanäle könnten mehrere parallel verlaufende Kammern aufweisen, so dass mehrere parallele Teilkanäle vorhanden wären. Das Vorhandensein mehrerer Teilkanäle könnte die Stabilität des Bauteils erhöhen.

Weiter ist es denkbar, dass das Bauteil nicht linear, wie in der Zeichnung dargestellt, ausgebildet ist, sondern mehrere lineare Teilbereiche aufweist, die in einem Winkel zueinander angeordnet sind. Jeder der linearen Teilbereiche kann einen Kanal aufnehmen.

Aber auch gekrümmte Bauteile, die einen ebenso gekrümmten Kanal aufweisen, sind möglich. Derartige Kanäle sind beispielweise mit Drehkernen in Spritzgußtechnik herstellbar.

## Patentansprüche

1. Bauteil für ein Kraftfahrzeug, insbesondere Querträger für den Cockpitbereich, wobei das Bauteil (10) als Leichtbauteil ausgebildet ist mit einem schalenförmigen Grundkörper (12) und mit aus angespritzten Kunststoff bestehenden Verstärkungsrippen (20), **dadurch gekennzeichnet, daß** zusammen mit den Verstärkungsrippen (20) wenigstens ein die Verstärkungsrippen durchsetzender Kanal (16) ganz oder teilweise im Innenraum (14) des Grundkörpers (12) eingespritzt ist und im Querschnitt gesehen ein Teilbereich (24) des Grundkörpers (12) einen Teil der Wandung (18) des Kanals (16) bildet oder der Teilbereich (24) unmittelbar die Wandung (18) bildet.

2. Bauteil nach Anspruch 1, **dadurch gekennzeichnet, daß** der Kanal (16) sich in Längsrichtung des Bauteils (10) erstreckt und an wenigsten einem seiner Enden ein Einlaß- (30) und/oder ein Auslaßstutzen (34) seitlich aus dem Bauteil (10) geführt ist.

3. Bauteil nach Anspruch 1 oder 2, **dadurch gekennzeichnet, daß** der Kanal einen Luftführungskanal (16) bildet und ein weiterer Luftführungskanal (28) vorgesehen ist, der in etwa symmetrisch zu dem ersten (16) angeordnet ist und die Einlaßstutzen (30, 32) der Luftführungskanäle (16 und 28) sich in etwa im Mittenbereich des Bauteils (10) befinden und die Auslaßstutzen (34, 36) sich in den Endbereichen des Bauteils (10) befinden.

4. Bauteil nach einem der vorhergehenden Ansprüche, **dadurch gekennzeichnet, daß** der Kanal (16, 28) sich von einem Ende zu dem anderen (40a, 41 a) im Querschnitt verjüngt.

5. Bauteil nach einem der vorhergehenden Ansprüche, **dadurch gekennzeichnet, daß** der Grundkörper (12) im Querschnitt U-förmig ausgebildet ist.

6. Bauteil nach Anspruch 5, **dadurch gekennzeichnet, daß** eine Basis (24) des U-förmigen Bauteils (10) in etwa bogenförmig ausgebildet ist.

7. Bauteil nach Anspruch 1, **dadurch gekennzeichnet, daß** der Grundkörper in einem Teilbereich doppelwandig ausgebildet ist.

8. Bauteil nach Anspruch 1, **dadurch gekennzeichnet, daß** Verstärkungsrippen (20, 26) sowohl in dem Innenraum (14) als auch außerhalb des Innenraums (14) angeordnet sind.

9. Verfahren zum Herstellen eines Bauteils nach einem der vorhergehenden Ansprüche, **gekennzeichnet durch**, folgenden Verfahrensschritte:
- Herstellen des Grundkörpers (12);
- Einlegen des Grundkörpers (12) in ein Spritzwerkzeug;
- Spritzen der Kunststoffteile, nämlich des wenigstens einen die Verstärkungsrippen durchsetzenden Kanals (16, 28), der Verstärkungsrippen (20, 26) und falls vorgesehen der wenigstens einen Einlaß- und/oder Auslaßstutzen (30, 32, 34, 36) dergestalt, dass im Querschnitt gesehen ein Teilbereich (24) des Grundkörpers (12) einen Teil der Wandung (18) des Kanals (16) bildet oder der Teilbereich (24) unmittelbar die Wandung (18) bildet;
- Entformen des Bauteils (10) mit den gespritzten Kunsstoffteilen.

10. Verfahren nach Anspruch 10, **dadurch gekennzeichnet, daß** weiterhin der Verfahrensschritt
- Einsetzen wenigstens eines Verschlußelementes (44, 46) in das wenigstens eine Ende (40a, 41a) des Luftführungskanals (16, 28),
durchgeführt wird.

11. Verwendung eines Bauteils nach einem der vorhergehenden Ansprüche 1 bis 9 als Instrumententafelträger in einem Kraftfahrzeug, wobei der Kanal (16 und/oder 28) ein Luftführungskanal und/oder ein Kabelkanal ist.

12. Verwendung eines Bauteils nach einem der vorhergehenden Ansprüche 1 bis 9 als unter einer Windschutzscheibe angeordneter Querträger in einem Kraftfahrzeug, wobei der Kanal (16 und/oder 28) ein Luftführungskanal zur Führung der der Windschutzscheibe und/oder den Seitenscheiben zuzuführenden Defrostluft ist.

13. Verwendung eines Bauteils nach einem der vorhergehenden Ansprüche 1 bis 9 als Träger in dem Kraftfahrzeug, beispielsweise als Querträger in einem Frontend, wobei der Kanal ein Kabelkanal ist oder ein Behältnis für ein Medium, wie Wischwasser für die Scheinwerfer oder die Windschutzscheibe, Kühlwasser, Öl oder Druckluft bildet, oder einen Kanal für die geschützte Verlegung von Benzinleitung, Ölleitung oder Druckluftleitungen bildet.

## Claims

1. Component for a motor vehicle, in particular a cross-member for the dashboard region, the component (10) being a lightweight component with a shell-shaped base body (12) with injection-moulded reinforcing ribs (20) of plastic, **characterised in that** at least one duct (16) extending through the reinforcing ribs totally or partially in the interior (14) of the base body (12) is injection-moulded in conjunction with the reinforcing ribs (20) and a part-region (24) of the base body (12) as viewed in cross section forms a part of the wall (18) of the duct (16) or the part-region (24) forms the wall (18) itself.

2. Component as claimed in claim 1, **characterised in that** the duct (16) extends in the longitudinal direction of the component (10) and an inlet piece (30) and/or an outlet piece (34) runs out from the side of the component (10) on at least one of its ends.

3. Component as claimed in claim 1 or 2, **characterised in that** the duct forms an air duct (16) and another air duct (28) is provided, disposed substantially symmetrically with the first (16), and the inlet pieces (30, 32) of the air ducts (16 and 28) are disposed substantially in the middle region of the component (10) and the outlet pieces (34, 36) are disposed at the end regions of the component (10).

4. Component as claimed in one of the preceding claims, **characterised in that** the duct (16, 28) tapers in cross section from one end to the other (40a, 41 a).

5. Component as claimed in one of the preceding claims, **characterised in that** the base body (12) has a U-shaped cross section.

6. Component as claimed in claim 5, **characterised in that** a base (24) of the U-shaped component (10) is substantially arcuate in shape.

7. Component as claimed in claim 1, **characterised in that** a part-region of the base body is double-walled.

8. Component as claimed in claim 1, **characterised in that** reinforcing ribs (20, 26) are disposed both in the interior (14) and outside of the interior (14).

9. Method of fabricating a component as claimed in one of the preceding claims,
**characterised by** the following steps:
- fabricating the base body (12);
- inserting the base body (12) in an injection mould;
- injection moulding the plastic parts, namely the at least one duct (16, 28) extending through the reinforcing ribs, the reinforcing ribs (20, 26) and, if provided, the at least one inlet and/or outlet piece (30, 32, 34, 36), disposed so that, as viewed in cross section, a part-region (24) of the base body (12) forms a part of the wall (18) of the duct (16) or the part-region (24) forms the wall (18) itself;
- removing the component (10) with the injection-moulded plastic parts from the mould.

10. Method as claimed in claim 10, **characterised in that** it incorporates an additional method step of
- fitting at least one closure element (44, 46) in the at least one end (40a, 41 a) of the air duct (16, 28).

11. Use of a component as claimed in one or more of preceding claims 1 to 9 as a dashboard support in a motor vehicle, in which case the duct (16 and/or 28) is an air duct and/or a cable duct.

12. Use of a component as claimed on one of preceding claims 1 to 9 as a cross-member in a vehicle underneath the windscreen, in which case the duct (16 and/or 28) is an air duct for delivering defrosting air to the windscreen and/or the side windows.

13. Use of a component as claimed in one of preceding claims 1 to 9 as a support in the motor vehicle, for example as a cross-member at a front end, in which case the duct is a cable duct or a container for a medium such as washing water for the headlamps or windscreen, coolant water, oil or compressed air, or a duct affording protection for laying a petrol line, an oil line or compressed air lines.

## Revendications

1. Composant pour un véhicule à moteur, en particulier traverse pour la zone d'habitacle, le composant (10) étant conçu comme un composant léger avec un corps de base (12) en forme de coque et avec des nervures de renfort (20) à base de matière synthétique injectée, **caractérisé en ce que**, conjointement avec les nervures de renfort (20), au moins un canal (16) traversant les nervures de renfort est injecté totalement ou partiellement dans l'espace intérieur (14) du corps de base (12) et, vue en section, une zone partielle (24) du corps de base (12) forme une partie de la paroi (18) du conduit (16) ou bien la zone partielle (24) forme directement la paroi (18).

2. Composant selon la revendication 1, **caractérisé en ce que** le conduit (16) s'étend dans le sens longitudinal du composant (10) et une tubulure d'entrée (30) et/ou une tubulure de sortie (34) est guidée sur le côté hors du composant (10) sur au moins l'une de ses extrémités.

3. Composant selon la revendication 1 ou 2, **caractérisé en ce que** le conduit forme un conduit de déflexion d'air (16) et un autre conduit de déflexion d'air (28) est prévu, qui est disposé de façon à peu près symétrique par rapport au premier (16) et les tubulures d'entrée (30, 32) des conduits de déflexion d'air (16 et 28) se trouvent à peu près dans la zone centrale du composant (10) et les tubulures de sortie (34, 36) se trouvent dans les zones d'extrémité du composant (10).

4. Composant selon l'une quelconque des revendications précédentes, **caractérisé en ce que** le conduit (16, 28) se rétrécit en section d'une extrémité à l'autre (40a, 41a).

5. Composant selon l'une quelconque des revendications précédentes, **caractérisé en ce que** le corps de base (12) est conçu en forme de U vu en section.

6. Composant selon la revendication 5, **caractérisé en ce qu'**une base (24) du composant (10) en forme de U est conçue à peu près en forme d'arc.

7. Composant selon la revendication 1, **caractérisé en ce que** le corps de base est conçu avec une double paroi dans une zone partielle.

8. Composant selon la revendication 1, **caractérisé en ce que** des nervures de renfort (20, 26) sont disposées aussi bien dans l'espace intérieur (14) qu'à l'extérieur de l'espace intérieur (14).

9. Procédé pour fabriquer un composant selon l'une quelconque des revendications précédentes, **caractérisé par** les étapes de procédé suivantes :
- fabrication du corps de base (12) ;
- introduction du corps de base (12) dans un outil d'injection ;
- injection des parties en matière synthétique, c'est-à-dire du au moins un conduit (16, 28) traversant les nervures de renfort, des nervures de renfort (20, 26) et si prévu des au moins une tubulure d'entrée/ou de sortie (30, 32, 34, 36) de telle sorte que, vue en section, une zone partielle (24) du corps de base (12) forme une partie de la paroi (18) du conduit (16) ou bien la zone partielle (24) forme directement la paroi (18) ;
- démoulage du composant (10) avec les parties injectées en matière synthétique.

10. Procédé selon la revendication 10, **caractérisé en ce qu'**également l'étape de procédé suivante :
- l'insertion d'au moins un élément de fermeture (44, 46) dans la au moins une extrémité (40a, 41a) du conduit de déflexion d'air (16, 28) est effectuée.

11. Utilisation d'un composant selon l'une quelconque des revendications 1 à 9 comme support de tableau de bord sur un véhicule à moteur, le conduit (16 et/ou 28) étant un conduit de déflexion d'air et/ou un caniveau de câble.

12. Utilisation d'un composant selon l'une quelconque des revendications 1 à 9 précédentes comme traverse disposée sous un pare-brise sur un véhicule à moteur, le conduit (16 et/ou 28) étant un conduit de déflexion d'air pour le guidage de l'air de dégivrage à amener au pare-brise et/ou aux vitres latérales.

13. Utilisation d'un composant selon l'une quelconque des revendications précédentes 1 à 9 en tant que support sur un véhicule à moteur, en particulier comme traverse dans une extrémité avant, le conduit étant un caniveau de câble ou formant un récipient pour un fluide, comme de l'eau de lavage pour les phares ou le pare-brise, de l'eau de refroidissement, de l'huile ou de l'air comprimé, ou formant un canal pour la pose protégée de conduite à essence, de conduites à huile ou de conduite à air comprimé.
